# EUROPEAN PATENT SPECIFICATION

(11) **EP 0 763 448 B1**
(45) Date of publication and mention of the grant of the patent: **07.06.2000**
(21) Application number: 96202495.6
(22) Date of filing: 09.09.1996
(51) Int. Cl.: B60R 19/34, F16F 7/12

(54) **An energy absorbing unit**
Energieaufnahmeeinheit
Unité d'absorption d'énérgie

(30) Priority: 11.09.1995 NL 1001169
(43) Date of publication of application: 19.03.1997
(73) Proprietor: HOOGOVENS STAAL B.V., 1970 CA IJmuiden (NL)
(72) Inventor: Kragtwijk, Simon Petrus, 1015 GN Amsterdam (NL)
(74) Representative: Herman de Groot, Johan Willem

(56) References cited:
- EP-A- 0 647 794
- DE-A- 2 104 636
- DE-A- 2 156 783
- DE-A- 4 240 237
- DE-A- 4 316 164
- DE-U- 9 416 640
- FR-A- 2 673 986
- FR-A- 2 685 042
- GB-A- 884 953
- US-A- 3 298 465
- US-A- 3 599 757

## Description

The invention relates to an energy absorbing unit for dissipating energy from the effect of an external force by permanent deformation, comprising a tubular element deformable by inversion or telescoping to dissipate the energy.

Such an energy absorbing unit is known from GB 884,953. In this known unit the deformable tubular element consists of a length of metal tube that is connected at one end, for example being formed with a flange, to a tubular reaction member of the energy absorbing unit, and at the other end to a thrust transmitting rod which transmits the force to the part of the tube where the inversion takes place. The tube is joined to the thrust transmitting rod by means of a welded joint.

This known unit comprises several parts which during manufacture have to be processed and joined together and partly as a result of this is somewhat heavy. The structure of the unit cannot be made substantially lighter by substituting a lighter material for example of aluminium, because the joint between the thrust transmitting rod and the tubular casing would collapse under the effect of an impact force. Extra material is needed at the joint to prevent this.

A unit according to the preamble of claim 1 is known e.g. from US-A-3 298 465.

The present invention provides an energy absorbing unit having the features of claim 1.

According to the invention the hollow member is formed by cold-forging or cold-extrusion from a solid piece of material, for example by cold-forging from a blank of steel sheet or by cold-extrusion from a blank of aluminium.

Because the deformable component is formed in one piece with an inwardly extending end wall, it can be formed without any discontinuity or inhomogeneity, to permit inversion to proceed in controlled fashion. Also no special assembly or jointing operations are needed.

Although for example in the case of manufacturing in aluminium it is possible to start with a blank cut off from a bar, it is preferable to take the blanks from rolled sheet, despite the extra cutting losses.

It has been found possible in this manner to make quickly and efficiently a tubular element that is deformable by inversion. A great advantage of the invention is that it is possible to make an optimum selection of the wall thickness locally, in particular the correct thickness and so strength may be given at flange parts and/or a base part at which attachments are to be made.

The invention will now be illustrated by reference to examples shown in the drawings in which:
Fig. 1 is a longitudinal section of a tubular element manufactured in one piece from aluminium by cold-extrusion in accordance with the invention, wherein the inversion deformation is intended, as seen from the centre of the element, to run from outside to inside and the central portion of the original blank is situated close to one end of the element,
Fig. 2 shows an alternative element in longitudinal section as in Fig. 1 but in which that inversion is intended to run from inside to outside as seen from the centre of the element,
Fig. 3 is a longitudinal section of another form of the invention, in which the central portion of the original blank is situated in an intermediate region of the unit of which the tubular element is a part,
Fig. 4 shows a longitudinal section of a tubular element similar to that in Fig. 3 but which however is manufactured from steel by cold-forging,
Figs. 5a and 5b show a tubular element in side elevation and plan respectively, as described for Fig. 1 wherein the end wall is provided with holes for attaching a load transmitting member,
Fig. 6 is an exploded view of an energy absorbing unit in which the component of Figs. 5a and 5b is incorporated and the thrust transmitting rod is formed from an extrusion,
Fig. 7 shows a tubular element similar to that in Fig. 2 but here joined to a separate cylindrical thrust transmitting part.

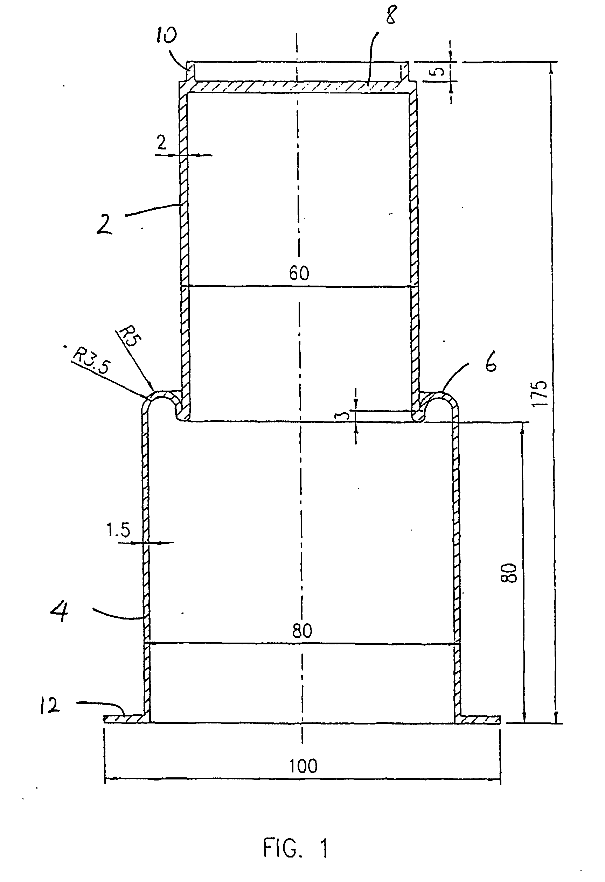

Fig. 1 shows a tubular element formed as a unitary hollow member for an energy absorbing unit according to the invention comprising a cylindrical part having two different diameter portions 2,4 joined through an annular portion 6 having an arched radial cross-section providing an inversion radius. At the end of the smaller diameter portion 2 remote from the annular portion 6 the member is closed by an end wall 8. A small cylindrical collar 10 projects from the wall. The opposite end of the tubular element is formed with an external flange 12.

The end wall 8 and the flange 12 serve to mount the tubular element in place, the flange for example being attached to the bodywork of a motor vehicle and the end wall to a bumper unit. When an axial impact of sufficient force is applied, the energy of the impact is absorbed by deformation of the tubular element in inversion. That is to say beginning at the inversion radius of the annular portion 6 the larger diameter portion 4 folds in on itself allowing the smaller diameter portion 2 to telescope into it.

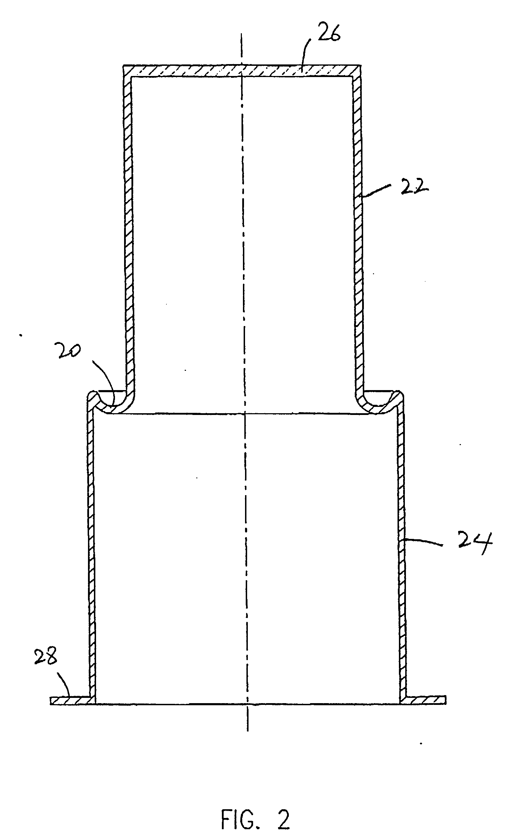

In the example of Fig. 2 the arched cross-section of the annular joining portion 20 between smaller and larger diameter cylindrical portions 22,24 is reversed as compared with Fig. 1. As in Fig. 1 an end wall 26 closes the smaller diameter portion and the larger diameter portion has an external flange 28. In this instance, when deformed under impact loading, the smaller diameter portion 22 inverts and the larger diameter portion 24 telescopes over the smaller diameter portion.

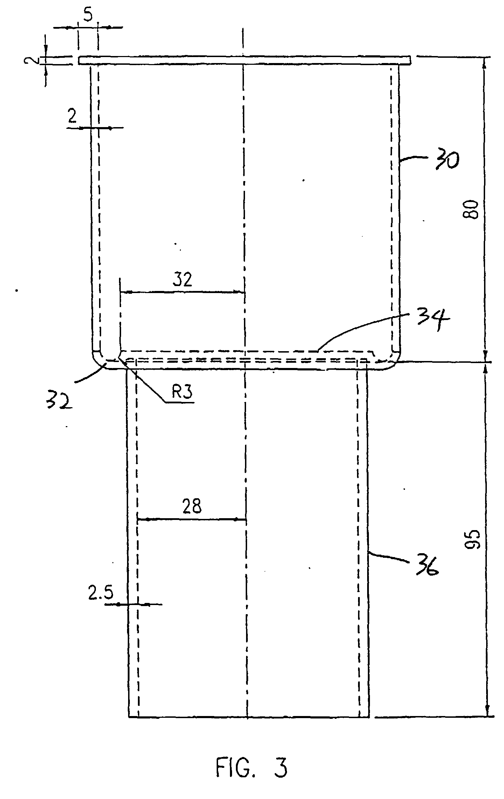

In Fig. 3 the unitary member has only one cylindrical portion 30 and the annular portion 32 joins it to a closing end wall 34. A separate tube 36 acts as a load transmitting member and fits within the annular portion to be secured to the member. As in the example of Fig. 1, the cylindrical portion will invert under axial loading.

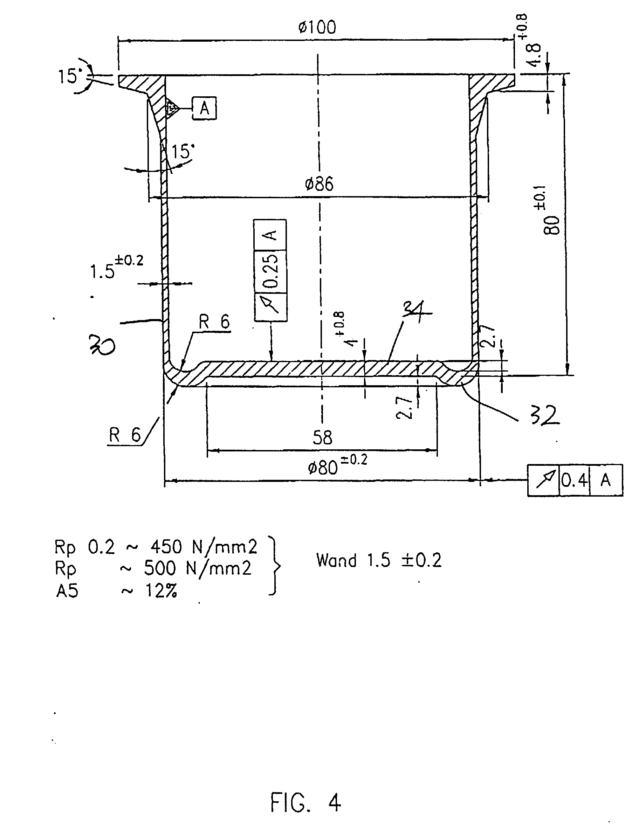

Fig. 4 shows a unitary member of the general form illustrated in Fig. 3, but made as a cold-forged steel tubular element with substantially reduced wall thickness in the deformable cylindrical portion. Corresponding parts are indicated by the same reference numerals as Fig. 3.

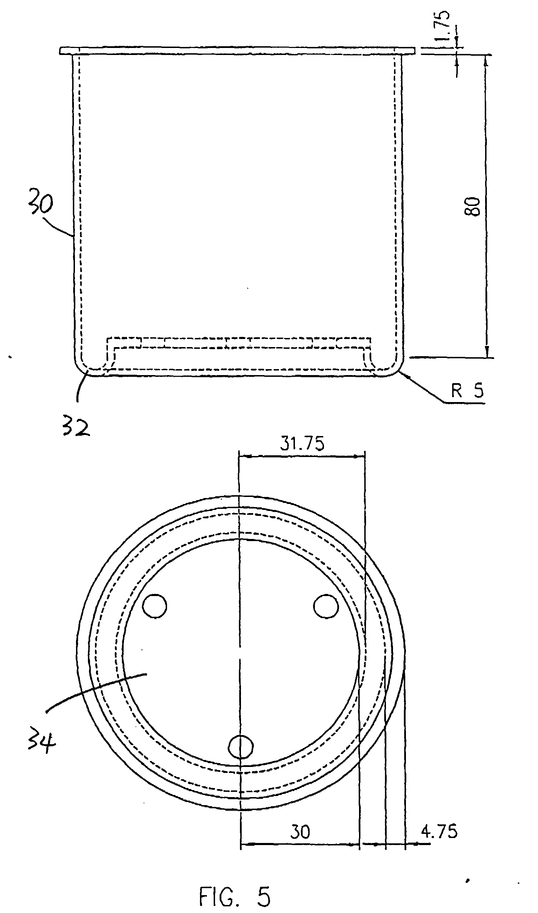

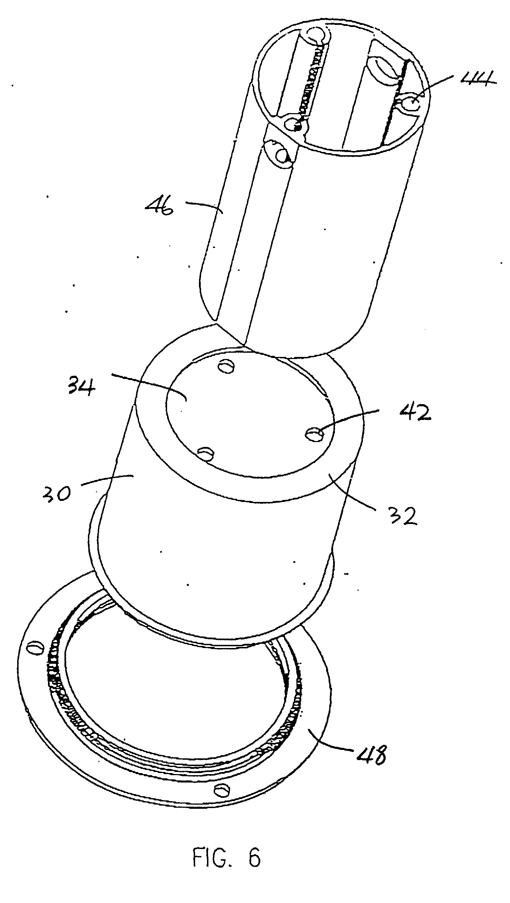

Fig. 5 shows an analogous unitary member as an aluminium extrusion with corresponding parts indicated by the same reference numerals, and Fig. 6 illustrates it with the associated components of an energy absorbing unit. Thus, the end wall 34 of the member has tapped holes 42 to receive screws driven through threaded channels 44 in a load transmitting member 46 corresponding to the member 36 in Fig. 3. The channels are arranged as open slots to facilitate the production of the member as an extrusion. A flange adaptor 48 is mounted on the other end of the unitary member, eg. as a press fit.

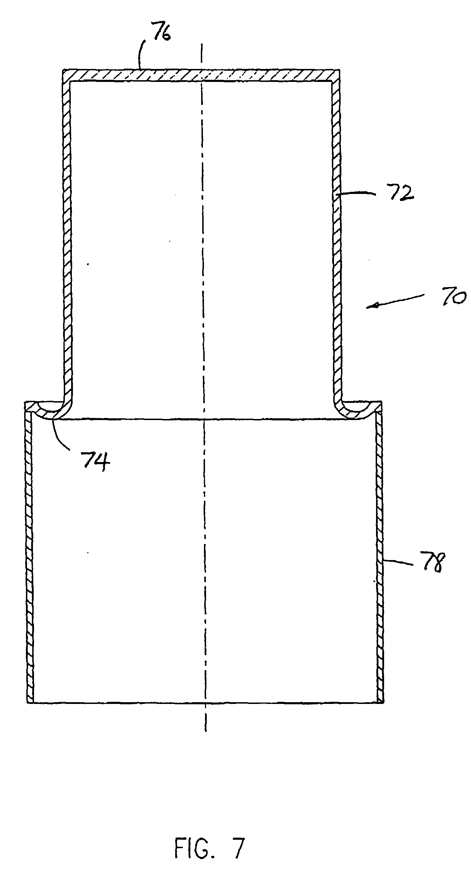

The two part assembly in Fig. 7 is similar in form to Fig. 2 and operates in the same way. The unitary member 70 now has only one cylindrical portion 72 with an outward annular formation 74 at one end and a closing wall 76 at the other. A separate tube 78 is secured to the outer rim of the annular portion.

The invention will be further illustrated by reference to some examples of the manufacture of the telescoping element.

Energy absorbing units can be made in aluminium or steel for example. An aluminium alloy with which good results are achieved is AlMgSi 0.5. A good steel alloy is Q-ST 34-3. In principle other alloys may be considered, but for a good inversion characteristic the yield point and breaking strength must not be too far apart and the material must be ductile (>12% in cases applied).

The starting material for the cold extrusion is a blank cut from a bar or preferably punched from a thick sheet. Typical dimensions for use in energy absorbing units for motor vehicles are a blank diameter of 60-80 mm and a thickness of 10-20 mm.

Depending on the complexity the material is forged or extruded in one or more stages. In aluminium the product can be cold-extruded in one stage. In steel more process stages are usually needed and the product is annealed between the forging stages to relieve internal stresses. Of course the product should preferably be made in the fewest possible stages.

The common dimensions of an energy absorbing unit for a motor vehicle are a diameter of 60-100 mm, a material thickness of 1-2.5 mm and an inversion radius in the range of 3-7 mm. In aluminium the material thickness is 2.3 mm with a diameter of 60 mm. In steel the material thickness is approximately 1.5 mm. A great advantage of cold extrusion is that it is possible to press flanges and rims on the base at the same time thus simplifying design, suspension and attachment. The mechanical properties are constant in the part that is intended to deform. The base part of the member can have somewhat different properties. In the case of a vehicle-mounted member, it can be joined to a ram, bumper or bodywork part in a wide variety of ways; with adhesive, by folded-seam or welded joints, with rivets, bolts, etc. In the case of steel, welding is a good choice and folded-seam and screwed joints in the case of the aluminium version. In the case of aluminium, welding should generally be avoided because the mechanical properties change, and where these do need to be brought back to standard a homogenisation treatment is necessary thereby incurring extra production costs.

If very high demands are placed on the energy absorbing unit another calibration stage and heat treatment can be used following the cold-forging operation or cold-extrusion.

## Claims

1. Energy absorbing unit for dissipating kinetic energy under the effect of an external force by inversion deformation of a tubular element, the tubular element being formed as a unitary hollow member from a single, solid piece of material comprising a cylindrical part (4,22,30,72) and a radially inwardly extending wall (8,26,34,76) integral therewith, characterised in that the tubular element is formed by cold-forging or cold-extrusion.

2. Energy absorbing unit according to claim 1 wherein said wall (34) closes one end of said hollow member.

3. Energy absorbing unit according to claim 1 or 2, wherein at a junction between said wall (8,34) and the cylindrical part (4,30) of the hollow member there is an annular portion (6,32) having a curved radial cross-section adapted to locate the initiation of said inversion deformation of the cylindrical part.

4. Energy absorbing unit according to claim 3, said unit comprising a supplementary tubular element secured to said cylindrical part at said annular portion, said supplementary tubular element being coaxial with said cylindrical part and extending away therefrom.

5. Energy absorbing unit according to any one of claims 1 to 3, wherein the cylindrical part and said supplementary tubular element have different diameters joined end to end, one of which is deformable by inversion under the effect of the external force, and said wall (8,26,76) is located remote from the junction between the supplementary tubular element and the cylindrical part.

6. Energy absorbing unit according to any one of the preceding claims, wherein said tubular element is formed from a piece of rolled sheet metal.

## Patentansprüche

1. Energieaufnahmeeinheit zur Dissipation von kinetischer Energie, die durch die Wirkung einer äußeren Kraft entsteht, durch Umkehrdeformation eines rohrförmigen Elementes, wobei das rohrförmige Element als ein einteiliges hohles Element aus einem einzelnen, festen Materialstück ausgebildet ist und einen zylindrischen Teil (4, 22, 30 72) und eine mit diesem einteilige, sich radial nach innen erstreckende Wand (8, 26, 34, 76) umfaßt, dadurch gekennzeichnet, daß das rohrförmige Element mittels Kaltumformung oder Kaltfließpressen hergestellt ist.

2. Energieaufnahmeeinheit nach Anspruch 1, worin die Wand (34) ein Ende des hohlen Elementes verschließt.

3. Energieaufnahmeeinheit nach Anspruch 1 oder 2, worin an einer Verbindung zwischen der Wand (8, 34) und dem zylindrischen Teil (4, 30) des hohlen Elementes ein ringförmiger Bereich (6, 32) mit einem gekrümmten radialen Querschnitt vorgesehen ist, der dazu geeignet ist, die Einleitung der Umkehrdeformation des zylindrischen Teils örtlich festzulegen.

4. Energieaufnahmeeinheit nach Anspruch 3, wobei die Einheit ein rohrförmiges Zusatzelement, das an dem zylindrischen Teil an dem ringförmigen Bereich befestigt ist, umfaßt, wobei das rohrförmige Zusatzelement koaxial mit dem zylindrischen Teil angeordnet ist und sich von diesem weg erstreckt.

5. Energieaufnahmeeinheit nach einem der Ansprüche 1 bis 3, worin das zylindrische Teil und das rohrförmige Zusatzelement unterschiedliche Durchmesser aufweisen, die Ende an Ende miteinander verbunden sind, aufweisen, wobei eines der beiden durch Umkehr unter Wirkung einer äußeren Kraft deformierbar ist, und wobei die Wand (8, 26, 76) entfernt von der Verbindung zwischen dem rohrförmigen Zusatzelement und dem zylindrischen Teil angeordnet ist.

6. Energieaufnahmeeinheit nach einem der vorhergehenden Ansprüche, worin das rohrförmige Element aus einem Stück gewalzten Metallbleches ausgebildet ist.

## Revendications

1. Unité d'absorption d'énergie pour dissiper une énergie cinétique sous l'effet d'une force extérieure par déformation par inversion d'un élément tubulaire, l'élément tubulaire se présentant sous la forme d'un élément creux d'une seule pièce, constitué à partir d'un seul morceau de matière pleine, comprenant une partie cylindrique (4, 22, 30, 72) et une paroi (8, 26, 34, 76) faisant corps avec celle-ci et s'étendant radialement vers l'intérieur, caractérisée en ce que l'élément tubulaire est formé par forgeage à froid ou par extrusion à froid.

2. Unité d'absorption d'énergie selon la revendication 1, dans laquelle ladite paroi (34) ferme une extrémité dudit élément creux.

3. Unité d'absorption d'énergie selon la revendication 1 ou 2, dans laquelle, au niveau d'une jonction entre ladite paroi (8, 34) et la partie cylindrique (4, 30) de l'élément creux se trouve une partie annulaire (6, 32) ayant une section transversale radiale courbe permettant de localiser l'amorce de ladite déformation par inversion de la partie cylindrique.

4. Unité d'absorption d'énergie selon la revendication 3, ladite unité comprenant un élément tubulaire supplémentaire fixé à ladite partie cylindrique au niveau de ladite partie annulaire, ledit élément tubulaire supplémentaire étant coaxial à ladite partie cylindrique et s'étendant depuis celle-ci.

5. Unité d'absorption d'énergie selon l'une quelconque des revendications 1 à 3, dans laquelle la partie cylindrique et ledit élément tubulaire supplémentaire ont, réunis, bout à bout, des diamètres différents, dont l'un est déformable par inversion sous l'effet de la force extérieure, et ladite paroi (8, 26, 76) se trouve à distance de la jonction entre l'élément tubulaire supplémentaire et la partie cylindrique.

6. Unité d'absorption d'énergie selon l'une quelconque des revendications précédentes, dans laquelle ledit élément tubulaire est constitué par un morceau de tôle métallique laminée.
